# FASCICULE DE BREVET EUROPEEN

(11) **EP 4 241 545 B1**
(45) Date de publication et mention de la délivrance du brevet: **28.08.2024**
(21) Numéro de dépôt: 23154387.7
(22) Date de dépôt: 01.02.2023
(51) Int. Cl.: A01B 63/10, A01B 59/00

(54) **BINEUSE UNIVERSELLE**
UNIVERSAL-BIREDDER
UNIVERSAL HOEING MACHINE

(30) Priorité: 10.03.2022 FR 2202112
(43) Date de publication de la demande: 13.09.2023
(73) Titulaire: Kverneland Group Les Landes-Genusson, 85130 Les Landes-Genusson (FR)
(72) Inventeur: BOUNON, Mathias, 89720 VERMENTON (FR)
(74) Mandataire: Oudin, Stéphane

(56) Documents cités:
- WO-A1-2005/084413
- GB-A- 2 021 918
- US-A1- 2006 131 040

## Description

### Domaine technique de l'invention

La présente invention concerne le domaine général de l'agriculture, et plus particulièrement une bineuse attelée à un tracteur pour des travaux de désherbage mécanique d'un champ.

### Etat de la technique

Dans le domaine de l'agriculture, le désherbage mécanique, notamment par binage, est une technique anciennement très répandue, que le développement et les progrès de la chimie ont reléguée à un cercle restreint de cultures spécialisées ou à certains systèmes de culture tels que, notamment, la culture biologique.

Toutefois, avec la réduction généralisée des usages de désherbants chimiques, pour des raisons techniques de lutte contre les résistances, ou en application de mesures de protection de l'environnement, l'alternative mécanique revêt aujourd'hui un intérêt immédiat et croissant, y compris dans le cadre des systèmes de culture conventionnels.

Ainsi, de nos jours, il est connu de recourir, à des bineuses attelées à un tracteur et munies d'une pluralité de dents droites, réglables en hauteur, équipées de lames ou de socs patte d'oie, pour des travaux de désherbage mécanique d'un champ. Ce type de bineuses permet un désherbage rapide et précis entre plusieurs rangs de culture.

Par ailleurs, pour pouvoir relever les dents droites hors du sol, par exemple, pour éviter de repasser sur des zones déjà désherber ou durant les phases de déplacement de la bineuse sur les voies publiques, lesdites dents sont classiquement fixées sur un parallélogramme déformable associé à des actionneurs hydrauliques et étant solidaire, de manière amovible, d'un châssis attelé à un tracteur.

Ce type de bineuses est certes efficace pour le désherbage mécanique, mais il ne permet pas de s'adapter facilement à toutes les configurations souhaitées par les différents utilisateurs et définies par un nombre d'inter-rangs à traiter simultanément et un écartement entre deux inter-rangs adjacents du champ de culture à désherber.

Document WO2005084413 divulgue un système d'alimentation destiné à des récepteurs d'un outil de travail à commande hydraulique, montés ou attelés à un tracteur ou similaire. Le tracteur comporte une soupape centrale déterminant le flux volumique de fluide de pression, une conduite d'amenée et de reflux côté outil de travail étant connectée à ladite soupape centrale. Ladite conduite d'amenée et de reflux comporte plusieurs récepteurs montés parallèlement, au moins un récepteur pouvant être connecté hydrauliquement à la soupape centrale par l'intermédiaire d'un dispositif de soupape de distribution. Le réglage du flux volumique de fluide de pression est effectué côté tracteur tandis que la distribution de fluide de pression est effectuée côté outil de travail par l'intermédiaire du dispositif de soupape de distribution.

### Résumé de l'invention

Le but de la présente invention est donc de proposer une alternative aux bineuses connues, cette alternative étant solide et pérenne et pouvant être fabriquée de manière industrielle. Par ailleurs, cette alternative est universelle en pouvant être mise en oeuvre facilement de manière à répondre à toutes les configurations souhaitées par l'utilisateur.

Conformément à l'invention, il est donc proposé une bineuse universelle agencée pour être attelée à un tracteur et comportant au moins :
- une interface de guidage attelée au tracteur,
- un châssis solidaire de ladite interface de guidage,
- une pluralité d'organes de relevage étant chacun fixés, de manière amovible, sur ledit châssis, et permettant de relever une pluralité de porte outils grâce à un actionneur raccordé hydrauliquement à un bloc hydraulique, et
- un circuit de distribution hydraulique comprenant au moins :
   - un boitier calculateur fixé sur le châssis et agencé pour communiquer avec un système de géolocalisation du tracteur,
   - un boitier de j onction fixé sur le châssis et raccordé au boitier calculateur, ledit boitier de jonction contenant une carte électronique associée à des sorties électriques, et
   - un distributeur hydraulique agencé pour autoriser, inverser ou bloquer la circulation d'huile provenant de l'entrée et du retour d'un groupe hydraulique du tracteur, ladite bineuse universelle étant remarquable en ce que le circuit de distribution hydraulique comporte deux tuyauteries raccordées audit distributeur hydraulique, et s'étendant transversalement sur l'ensemble dudit châssis et étant munies chacune d'une pluralité de coupleurs rapides répartis le long de chaque tuyauterie, et en ce que le bloc hydraulique de chaque actionneur est raccordé hydrauliquement aux deux tuyauteries par l'intermédiaire de flexibles munis de coupleurs rapides complémentaires auxdits coupleurs rapides et aptes à être connectés à ces derniers, et électriquement à une desdites sorties électriques.

La bineuse universelle comporte en outre des connecteurs électriques disposés à proximité desdits coupleurs rapides et raccordés auxdites sorties électriques et en ce que le bloc hydraulique de chaque actionneur est raccordé électriquement à un des connecteurs électriques.

Le distributeur hydraulique est de préférence du type distributeur 4/3 à centre tandem et à commande électrique et en ce que les bobines de commande associées sont raccordées électriquement à une desdites sorties électriques ou à un des connecteurs électriques correspondants.

De manière avantageuse, les coupleurs rapides des tuyauteries et les coupleurs rapides complémentaires du bloc hydraulique sont du type à clapet.

Selon une mode de réalisation avantageux, l'une des deux tuyauteries est munie de coupleurs rapides mâles et l'autre tuyauterie est munie de coupleurs rapides femelles.

### Brève description des figures

D'autres avantages et caractéristiques ressortiront mieux de la description qui va suivre d'un mode d'exécution de l'invention, en référence à la figure annexée sur laquelle :
[Fig 1] est une vue en perspective arrière en partie éclatée d'une bineuse universelle conforme à l'invention,
[Fig 2] est une vue en perspective arrière d'une partie du châssis de la bineuse universelle de la figure 1,
[Fig 3] est une vue en perspective avant d'une partie du châssis de la figure 2,
[Fig 4] est une vue en perspective arrière d'un parallélogramme déformable associé à un porte outils de la bineuse universelle de la figure 1,
[Fig 5] est une vue schématique d'un circuit hydraulique simplifié de la bineuse universelle de la figure 1.

### Description des modes de réalisation

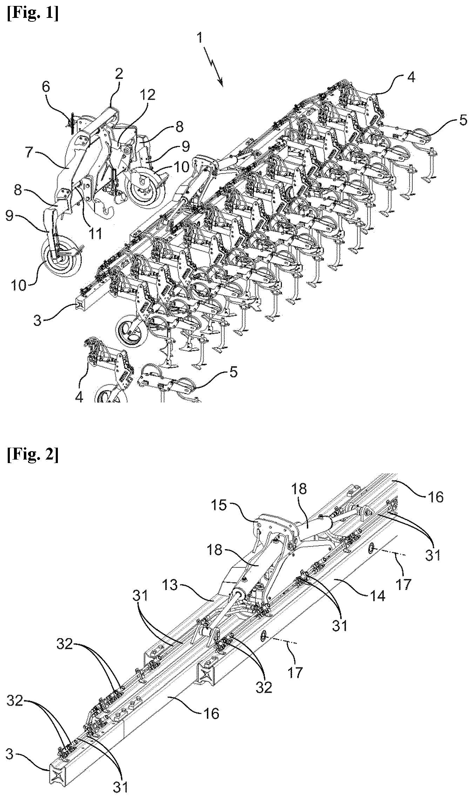

En référence à la figure 1, la bineuse universelle 1 selon l'invention est prévue pour être attelée par sa face avant à un véhicule agricole, classiquement un tracteur, non représenté sur les figures.

On désigne ici par "avant" tout élément ou partie d'élément de la bineuse universelle selon l'invention disposé du côté du tracteur et par "arrière" tout élément ou partie d'élément disposé du côté opposé au tracteur.

La bineuse universelle 1 selon l'invention comporte au moins :
- une interface de guidage 2 attelée au tracteur,
- un châssis 3 solidaire de ladite interface de guidage 2,
- une pluralité d'organes de relevage 4 fixés, de manière amovible, sur ledit châssis 3, leur nombre étant variable et dépendant du nombre d'inter-rang des cultures à désherber, et
- une pluralité de porte outils 5 fixés chacun sur l'un des organes de relevage 4.

L'interface de guidage 2 est attelée au tracteur par un premier attelage 6 à trois points normalisé, de préférence du type catégorie II.

Par ailleurs, l'interface de guidage 2 a une hauteur et une largeur de voie réglables en continu. Pour cela, elle comporte une ossature 7 recevant sur sa face avant ledit premier attelage 6 et sur sa face arrière deux poutres 8 s'étendant horizontalement de part et d'autre de ladite ossature 7.

Chacune des poutres 8 reçoit en outre à son extrémité libre un pied 9 s'étendant verticalement et recevant à son extrémité libre une roue à disque 10 de grand diamètre assurant le contact avec le sol de l'interface de guidage 3 tout en assurant totalement la stabilité de cette dernière. Chaque pied 9 est avantageusement réglable en hauteur afin de permettre un réglage en hauteur optimal de l'interface de guidage 3 en fonction du type de culture (cultures en planches, plantes sarclées ou légumes).

De plus, l'ossature 7 de l'interface de guidage 2 comporte également sur sa face arrière un deuxième attelage 12 à trois points normalisé pour permettre la solidarisation du châssis 3 de la bineuse universelle 1 selon l'invention, ce deuxième attelage 12 étant de préférence du type catégorie II. Ledit deuxième attelage 12 est apte à translater par rapport à cette dernière le long de leur axe longitudinal et perpendiculairement au plan sagittal de la bineuse universelle 1 selon l'invention
Le mouvement de translation dudit deuxième attelage 12 est avantageusement assuré par des actionneurs 11 afin de garantir un suivi des rangs de culture par l'outil attelé, lesdits actionneurs 11 étant, de manière classique, du type vérins hydraulique à double effet.

Enfin, selon un mode de réalisation avantageux, l'interface de guidage 2 est associée à un dispositif d'autoguidage par caméra colorimétrique, permettant un suivi des lignes de culture même en végétation haute.

En référence à la figure 2, le châssis 3 de la bineuse universelle 1 selon l'invention comporte au moins :
- deux premières poutres 13,14 horizontales parallèles entre elles, s'étendant perpendiculairement au plan sagittal de ladite bineuse universelle 1 et maintenues écartées l'une de l'autre par une structure 15 reliant la face supérieure de la zone médiane de chacune des premières poutres 13,14,
- deux deuxièmes poutres 16 disposées chacune parallèlement et en partie entre les deux premières poutres 13,14, s'étendant de part et d'autre de l'une des extrémités desdites deux premières poutres 13,14, et étant chacune montée pivotante sur ces deux premières poutres 13,14 par son extrémité située entre ces dernières autour d'un axe 17 horizontal et parallèle au plan sagittal de ladite bineuse universelle 1.

La première poutre 13 disposée du côté de l'interface de guidage 2, nommée ci-après première poutre 13 avant, étant solidaire du deuxième attelage 12 de l'ossature 7 de ladite interface de guidage 3. L'autre première poutre 14 est alors nommée ci-après première poutre 14 arrière.

Les deux deuxièmes poutres 16 sont aptes à pivoter entre une position "travail" dans laquelle elles sont parallèles aux deux premières poutres 13,14 avant et arrière et une position "transport" dans laquelle elles sont perpendiculaires aux deux premières poutres 13,14 avant et arrière. Ce pivotement des deux deuxièmes poutres 16 est assuré par deux actionneurs 18 étant, de manière classique, du type vérins hydraulique à double effet étant chacun solidarisé entre la structure 15 du châssis 3 de la bineuse universelle 1 et l'une des deux deuxièmes poutres 16.

Lesdites premières poutres 13,14 avant et arrière et deuxièmes poutres 16 ont en outre avantageusement une section transversale en forme générale de H.

Le châssis 3 est avantageusement évolutif en largeur (5 m, 6 m, 7 m, ...) en ajoutant audites deuxièmes poutres 16 des rallonges et, comme décrit précédemment, repliable pour effectuer des déplacements sur la voie publique.

Par ailleurs, selon un mode de réalisation extrême, le châssis 3 de la bineuse universelle 1 selon l'invention ne comporte que la première poutre 13 avant. Ce mode de réalisation extrême est certes économique, mais il se révèle d'une utilisation particulièrement limitée avec un nombre de configurations très réduit.

La bineuse universelle 1 selon l'invention comporte également une pluralité d'organes de relevage 4 fixés, de manière amovible, de son châssis 3 en général, et en particulier de la première poutre 14 arrière et des deuxièmes poutres 16.

Cependant, on comprend bien que le fait d'avoir deux premières poutres 13,14 avant et arrière reliées entre elles par une structure 15 permet d'offrir une rigidité maximale tout en permettant une fixation ferme desdits organes de relevage 4.

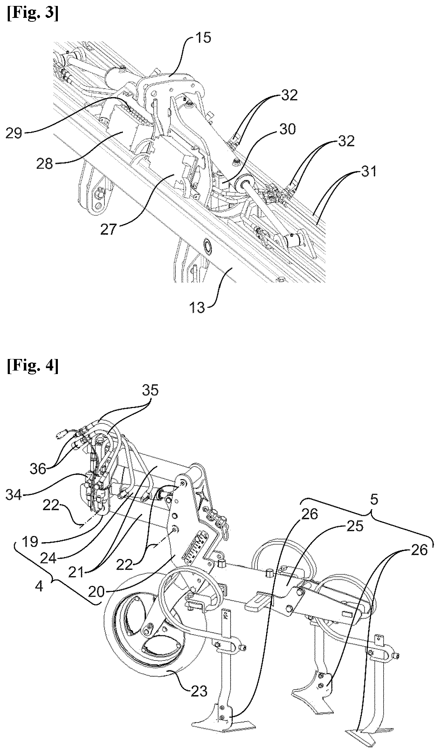

En référence à la figure 4, chacun des organes de relevage 4 comporte deux supports avant19 et arrière 20 parallèles entre eux et globalement verticaux et deux palonniers 21 parallèles entre eux, chacun des supports avant19 et arrière 20 étant monté pivotant à l'une des extrémités des deux palonniers 21 autour d'un axe 22 horizontal et perpendiculaire au plan sagittal de la bineuse universelle 1, la projection des quatre axes 22 sur ledit plan sagittal de la bineuse universelle 1 formant un parallélogramme déformable.

Le support avant 19 de chaque organe de relevage 4 est fixé, de manière amovible, de son châssis 3 de la bineuse universelle 1. Par ailleurs, de façon avantageuse, le support arrière 20 de chaque organe de relevage 4 s'étend en direction du sol au-delà du palonnier 20 situé le plus près du sol, de manière à recevoir le porte outils 5 correspondant, ce dernier étant avantageusement équipé d'une roue d'appui 23.

Pour relever ou descendre le porte outils 5 associé, chaque organe de relevage 4 est mis en mouvement par un actionneur 24 étant, de manière classique, du type vérin hydraulique à double effet étant chacun solidarisé entre le support avant19 et le support arrière 20. L'actionneur 24 permet de faire passer l'organe de relevage 4 associé d'une position "haute" dans laquelle les outils 26 sont hors du sol et une position "basse" dans laquelle les outils 26 sont dans le sol

Chaque roue d'appui 23 est avantageusement réglable en hauteur par rapport à l'organe de relevage 4 associé afin de régler avec précision la profondeur de travail dans le sol de sorte à permettre le travail du sol.

Chaque porte outils 5 comporte une barre 25 globalement horizontale s'étendant parallèlement plan sagittal de la bineuse universelle 1 et étant apte à porter un ou plusieurs outils 26 du type, par exemple, des socs en forme de patte d'oie, des lames "Lelièvre", des dents pour un scalpage précis en déplaçant peu de terre, des dents vibrantes pour butter et recouvrir les adventices avec des socs demi-coeur, coeur plein ou butteurs, des disques ouvreurs, des doigts Kress, des disques protège-plants, ou des peignes arrière.

Pour mettre en mouvement de l'actionneur 24 de chaque organe de relevage 4, la bineuse universelle 1 comporte également un circuit de distribution hydraulique agencé pour réguler un débit d'huile fourni en continu par un groupe hydraulique du tracteur.

En référence aux figures 2 à 5, ce circuit de distribution hydraulique comprend au moins :
- un boitier calculateur 27 (en anglais ECU : Electronic Control Unit) fixé sur la première poutre 13 avant du châssis 3 de la bineuse universelle 1 et agencé pour communiquer avec un système de géolocalisation du tracteur par l'intermédiaire d'une connexion filaire normalisée ISOBUS,
- un boitier de jonction 28 fixé sur la première poutre 13 avant dudit châssis 3 et raccordé au boitier calculateur 27, ledit boitier de jonction 28 contenant une carte électronique associée à une pluralité (au moins dix-huit) de sorties électriques 29 basses tension (à savoir une tension comprise entre zéro et douze Volts),
- un distributeur hydraulique 30 agencé pour autoriser, inverser ou bloquer la circulation d'huile provenant de l'entrée et du retour d'un groupe hydraulique du tracteur
- deux tuyauteries 31 raccordées audit distributeur hydraulique 30, s'étendant sur l'ensemble dudit châssis 3, c'est-à-dire le long des première poutre 14 arrière et deuxièmes poutres 16, et étant munies chacune d'une pluralité de coupleurs rapides 32, avantageusement du type à clapet (en anglais "push-pull"), répartis le long de chaque tuyauterie 31 de façon à répondre à l'ensemble des configurations en nombre et en écartement entre les organes de relevage 4, les deux tuyauteries 31 étant respectivement raccordées à l'entrée et au retour du groupe hydraulique du tracteur, et
- des connecteurs électriques, non représentés, disposés à proximité desdits coupleurs rapides 32 et raccordés, de préférence de manière filaire, auxdites sorties électriques 29.

Pour rappel, la norme ISOBUS (ISO 11783) permet de rendre compatible la communication entre un tracteur et son outil attelé, même s'ils ne sont pas du même constructeur. Elle permet également l'échange de données entre le tracteur et un logiciel de gestion de parcelles.

De plus, les coupleurs rapides 32 des deux tuyauteries 31 sont soit du type mâle soit du type femelle. Selon un mode de réalisation avantageux facilitant le raccordement des organes de relevage 4 et la mise en oeuvre de la bineuse universelle 1, l'une des deux tuyauteries 31 est munie de coupleurs rapides 32 mâles et l'autre tuyauterie 31 est munie de coupleurs rapides 32 femelles.

Le boitier calculateur 27 est paramétré en usine pour répondre à toutes les configurations possibles, chaque configuration étant fonction du nombre d'organes de relevage 4, de la distance inter-rangs, de la largeur totale de la bineuse 1, c'est-à-dire celle de son châssis 3.

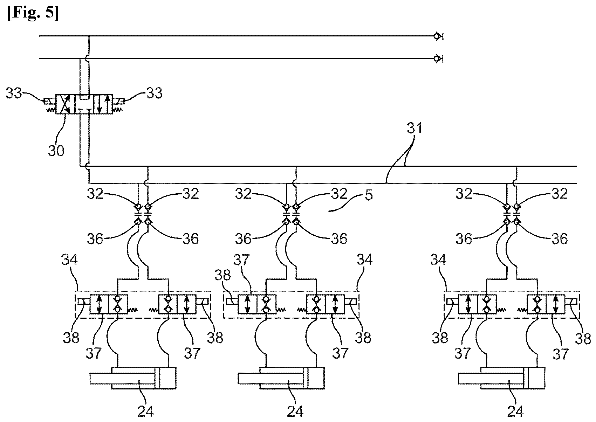

Le distributeur hydraulique 30, qui est avantageusement du type by-pass double effet (Cf. figure 5), interdit la circulation de l'huile dans les deux tuyauteries 31 lorsque les bobines 33 de commande associées ne sont pas excitées, ces dernières étant raccordées électriquement à une des sorties électriques 29 du circuit de distribution hydraulique, par l'intermédiaire d'un des connecteurs électriques.

On désigne ici par "by-pass double effet" un distributeur 4/3 à centre tandem et à commande électrique permettant en position repos de bloquer les ports raccordés aux deux tuyauteries 31 et de mettre en relation hydraulique les entrée et retour du groupe hydraulique du tracteur.

Par ailleurs, les informations du système de géolocalisation du tracteur indiquant les zones du terrain à biner sont transmises du tracteur au boitier calculateur 27 afin de relever ou non tout ou partie des porte outils 5 à des endroits déterminés à l'aide des organes de relevage 4 associés.

Par ailleurs, en référence aux figures 4 et 5, pour permettre la mise en mouvement de chaque organe de relevage 4, l'actionneur 24 correspondant est raccordé hydrauliquement à un bloc hydraulique 34 lui-même raccordé hydrauliquement aux deux tuyauteries 31 par l'intermédiaire de deux flexibles 35 munis chacun de coupleurs rapides 36 complémentaires aux coupleurs rapides 32 des deux tuyauteries 31 aptes à être connectés avec ces derniers. Ledit bloc hydraulique 34 comporte deux valves 37 normalement fermées au repos permet l'immobilisation de l'actionneur 24 dans une position donnée lorsque les bobines 38 associées ne sont pas excitées. Le bloc hydraulique 34 (plus particulièrement ses bobines 38) est raccordé électriquement à une des sorties électriques 29 du boitier de jonction 28 du circuit de distribution hydraulique, par l'intermédiaire d'un des connecteurs électriques.

On comprend bien que l'Homme du Métier n'aura aucune difficulté à ajouter des éléments notamment hydrauliques tels que, par exemple, des filtres, des limiteurs de débit, ou encore des soupapes pour garantir un fonctionnement optimal de la bineuse universelle 1 selon l'invention.

Avec cette configuration, en partant d'une configuration dans laquelle les porte outils 5 sont en position "haute", une activation électrique d'une des bobines 33 du distributeur hydraulique 30 du circuit de distribution hydraulique permet la mise sous pression d'une des tuyauteries 31 du circuit de distribution hydraulique, et une activation électrique des bobines 38 du bloc hydraulique 34 d'un ou plusieurs organes de relevage 4 permet le passage de l'huile dans les actionneurs 24 correspondants de sorte à faire passer l'un ou plusieurs organes de relevage 4 en position "basse". Dans cette hypothèse, l'autre tuyauterie 31 du circuit de distribution hydraulique permet le retour d'huile des actionneurs 24 jusqu'au groupe hydraulique du tracteur.

A l'inverse, pour l'opération de relevage des parallélogrammes, une activation électrique de l'autre des bobines 33 du distributeur hydraulique 30 du circuit de distribution hydraulique permet d'obtenir une inversion des tuyauteries 31 du circuit de distribution hydraulique, et une activation électrique des bobines 38 du bloc hydraulique 34 d'un ou plusieurs organes de relevage 4 permet le passage de l'huile dans les actionneurs 24 correspondants de sorte à faire passer l'un ou plusieurs organes de relevage 4 en position "haute".

On comprend bien qu'en fonction des données de système de localisation du tracteur, le boitier calculateur 27 va déterminer si un ou plusieurs porte outils 5 doivent être relevés et va transmettre les ordres au boitier de jonction 28 pour que ce dernier agisse sur les bobines 33 du distributeur hydraulique 30 du circuit de distribution hydraulique et les bobines 38 du bloc hydraulique 34 des organes de relevage 4 correspondants aux porte outils 5 à relever.

Par ailleurs, les deux actionneurs 18 assurant le pivotement des deux deuxièmes poutres 16 du châssis 3 sont également raccordés hydrauliquement à un distributeur, non représenté, avantageusement semblable au distributeur hydraulique 30 du circuit de distribution hydraulique, ce distributeur étant lui-même raccordé hydrauliquement au groupe hydraulique du tracteur, et électriquement à une des sorties électriques 29 du boitier de jonction 28 du circuit de distribution hydraulique.

Avec cette configuration de la bineuse universelle 1 selon l'invention, on comprend bien que le circuit de distribution hydraulique est commun à tous les organes de relevage 4 et que le positionnement de ces derniers n'est plus une contrainte car il suffit de coupler les coupleurs rapides 36 complémentaires desdits organes de relevage 4 aux coupleurs rapides 32 des tuyauteries 31 dudit circuit de distribution hydraulique.

Par ailleurs, le circuit de distribution hydraulique de la bineuse universelle 1 selon l'invention permet d'intégrer en usine les dix-neuf configurations les plus courantes, ce qui permet de ne plus faire une bineuse sur-mesure mais bien une bineuse universelle 1 adapté à tout type de client. De plus, un client conserve la possibilité de moduler à tout moment sa bineuse universelle 1 et de l'adapter, par exemple, à un nouveau semoir.

En outre, on comprend bien que cette configuration de la bineuse universelle 1 selon l'invention permet une réduction significative des coûts de matière et de main d'oeuvre. En effet, la quantité de tuyauteries 31 et flexibles utilisée est limitée au strict nécessaire et un seul boitier calculateur 27 est nécessaire. De plus, le circuit de distribution hydraulique peut être prémonté comme un sous ensemble ce qui réduit de manière importante le temps de montage et permet une industrialisation de la fabrication et du montage, tout en limitant voire annulant tout risque d'erreurs.

Enfin, la mise en oeuvre de la bineuse universelle 1 selon l'invention est aisée, les flexibles 35 de chaque organe de relevage 4 ne restent pas en pression, il est donc facile de coupler ou désaccoupler les coupleurs rapides 36 desdits organes de relevage 4 aux coupleurs rapides 32 des tuyauteries 31 dudit circuit de distribution hydraulique.

On comprend bien que la bineuse universelle 1 selon l'invention est, bien entendu, utilisé pour des travaux de désherbage mécanique d'un champ.

## Revendications

1. Bineuse universelle (1) agencée pour être attelée à un tracteur et comportant au moins :
- une interface de guidage (2) attelée au tracteur,
- un châssis (3) solidaire de ladite interface de guidage (2),
- une pluralité d'organes de relevage (4) étant chacun fixés, de manière amovible, sur ledit châssis (3), et permettant de relever une pluralité de porte outils (5) grâce à un actionneur (24) raccordé hydrauliquement à un bloc hydraulique (34), et
- un circuit de distribution hydraulique comprenant au moins :
• un boitier calculateur (27) fixé sur le châssis (3) et agencé pour communiquer avec un système de géolocalisation du tracteur,
• un boitier de jonction (28) fixé sur le châssis (3) et raccordé au boitier calculateur (27), ledit boitier de jonction (28) contenant une carte électronique associée à des sorties électriques (29), et
• un distributeur hydraulique (30) agencé pour autoriser, inverser ou bloquer la circulation d'huile provenant de l'entrée et du retour d'un groupe hydraulique du tracteur, le circuit de distribution hydraulique comportant au moins deux tuyauteries (31) raccordées audit distributeur hydraulique (30), et s'étendant sur l'ensemble dudit châssis (3) et étant munies chacune d'une pluralité de coupleurs rapides (32) répartis le long de chaque tuyauterie (31), le bloc hydraulique (34) de chaque actionneur (24) étant raccordé hydrauliquement aux deux tuyauteries (31) par l'intermédiaire de flexibles (35) munis de coupleurs rapides (36) complémentaires auxdits coupleurs rapides (32) et aptes à être connectés à ces derniers, et électriquement à une desdites sorties électriques (29).

2. Bineuse universelle (1) selon la revendication 1 **caractérisée en ce qu'**elle comporte des connecteurs électriques disposés à proximité desdits coupleurs rapides (32) et raccordés auxdites sorties électriques (29) et **en ce que** le bloc hydraulique (34) de chaque actionneur (24) est raccordé électriquement à un des connecteurs électriques.

3. Bineuse universelle (1) selon l'une quelconque des revendications 1 ou 2 **caractérisée en ce que** le distributeur hydraulique (30) est du type distributeur 4/3 à centre tandem et à commande électrique et **en ce que** les bobines (33) de commande associées sont raccordées électriquement à une desdites sorties électriques (29) ou à un des connecteurs électriques correspondants.

4. Bineuse universelle (1) selon l'une quelconque des revendications 1 à 3 **caractérisée en ce que** les coupleurs rapides (32) des tuyauteries (31) et les coupleurs rapides (36) complémentaires du bloc hydraulique (34) sont du type à clapet.

5. Bineuse universelle (1) selon l'une quelconque des revendications 1 à 4 **caractérisée en ce que** l'une des deux tuyauteries (31) est munie de coupleurs rapides (32) mâles et l'autre tuyauterie (31) est munie de coupleurs rapides (32) femelles

## Patentansprüche

1. Universelle Reihenhacke (1), die dazu angeordnet ist, an einen Traktor angehängt zu werden, und mindestens Folgendes umfasst:
- eine Führungsschnittstelle (2), die an den Traktor angehängt wird,
- einen Rahmen (3), der fest mit der Führungsschnittstelle (2) verbunden ist,
- eine Vielzahl von Hebeelementen (4), die jeweils abnehmbar am Rahmen (3) befestigt sind und das Anheben einer Vielzahl von Werkzeugträgern (5) dank eines Stellglieds (24), das hydraulisch mit einem Hydraulikblock (34) verbunden ist, ermöglichen, und
- einen hydraulischen Verteilerkreis, der mindestens Folgendes umfasst:
• einen Rechnerkasten (27), der am Rahmen (3) befestigt und dazu angeordnet ist, mit einem Geolokalisierungssystem des Traktors zu kommunizieren,
• ein Verteilerkasten (28), der am Rahmen (3) befestigt und mit dem Rechnerkasten (27) verbunden ist, wobei der Verteilerkasten (28) eine Leiterplatte enthält, die mit elektrischen Ausgängen (29) verbunden ist, und
• ein hydraulisches Steuerventil (30), das dazu angeordnet ist, die Ölzirkulation vom Eingang und von der Rückführung eines Hydraulikaggregats des Traktors zu ermöglichen, umzukehren oder zu blockieren,
wobei der hydraulische Verteilerkreis mindestens zwei Schlauchsätze (31) umfasst, die mit dem hydraulischen Steuerventil (30) verbunden sind, sich über den gesamten Rahmen (3) erstrecken und mit einer Vielzahl von Schnellkupplungen (32) ausgestattet ist, die entlang jedes Schlauchsatzes (31) verteilt sind,
wobei der Hydraulikblock (34) jedes Aktuators (24) hydraulisch mit den beiden Schlauchsätzen (31) über Schläuche (35) verbunden ist, die mit Schnellkupplungen (36) ausgestattet sind, die zu den Schnellkupplungen (32) komplementär und dazu ausgestaltet sind, elektrisch mit diesen und mit einem der elektrischen Ausgänge (29) verbunden zu sein.

2. Universelle Reihenhacke (1) nach Anspruch 1, **dadurch gekennzeichnet, dass** sie elektrische Anschlüsse umfasst, die in der Nähe der Schnellkupplungen (32) angeordnet und mit den elektrischen Ausgängen (29) verbunden sind, und dass der Hydraulikblock (34) jedes Stellglieds (24) elektrisch mit einem der elektrischen Anschlüsse verbunden ist.

3. Universelle Reihenhacke (1) nach einem der Ansprüche 1 oder 2, **dadurch gekennzeichnet, dass** das hydraulische Steuerventil (30) vom Typ eines elektrisch gesteuerten 4/3-Wegeventils mit Tandem-Mittelstellung ist und dass die zugehörigen Steuerspulen (33) elektrisch mit einem der elektrischen Ausgänge (29) oder mit einem der entsprechenden elektrischen Anschlüsse verbunden sind.

4. Universelle Reihenhacke (1) nach einem der Ansprüche 1 bis 3, **dadurch gekennzeichnet, dass** die Schnellkupplungen (32) der Schlauchsätze (31) und die komplementären Schnellkupplungen (36) des Hydraulikblocks (34) vom Push-Pull-Typ sind.

5. Universelle Reihenhacke (1) nach einem der Ansprüche 1 bis 4, **dadurch gekennzeichnet, dass** einer der beiden Schlauchsätze (31) mit männlichen Schnellkupplungen (32) ausgestattet ist und der andere Schlauchsatz (31) mit weiblichen Schnellkupplungen (32) ausgestattet ist.

## Claims

1. A universal inter-row hoe (1) arranged so as to be trailed to a tractor and including at least:
- a guide interface (2) trailed to the tractor,
- a frame (3) secured to said guide interface (2),
- a plurality of lifting members (4) each being removably fastened on said frame (3), and allowing lifting a plurality of tool carriers (5) thanks to an actuator (24) hydraulically connected to a hydraulic block (34), and
- a hydraulic distribution circuit comprising at least:
• a computer box (27) fastened on the frame (3) and arranged so as to communicate with a geolocation system of the tractor,
• a junction box (28) fastened on the frame (3) and connected to the computer box (27), said junction box (28) containing an electronic board associated to electrical outputs (29), and
• a hydraulic distributor (30) arranged so as to enable, reverse or block the circulation of oil originating from the input and from the return of a hydraulic unit of the tractor, the hydraulic distribution circuit including at least two hosing sets (31) connected to said hydraulic distributor (30), and extending over the entirety of said frame (3) and each being provided with a plurality of quick couplers (32) distributed along each hosing set (31), the hydraulic block (34) of each actuator (24) being hydraulically connected to the two hosing sets (31) through hoses (35) provided with quick couplers (36) complementary to said quick couplers (32) and able to be connected to these, and electrically to one of said electrical outputs (29).

2. The universal inter-row hoe (1) according to claim 1, **characterized in that** it includes electrical connectors disposed proximate to said quick couplers (32) and connected to said electrical outputs (29) and **in that** the hydraulic block (34) of each actuator (24) is electrically connected to one of the electrical connectors.

3. The universal inter-row hoe (1) according to any one of claims 1 or 2, **characterized in that** the hydraulic distributor (30) is an electrically-controlled tandem-center 4/3 spool valve type one and **in that** the associated control coils (33) are electrically connected to one of said electrical outputs (29) or to one of the corresponding electrical connectors.

4. The universal inter-row hoe (1) according to any one of claims 1 to 3, **characterized in that** the quick couplers (32) of the hosing sets (31) and the complementary quick couplers (36) of the hydraulic block (34) are of the push-pull type.

5. The universal inter-row hoe (1) according to any one of claims 1 to 4, **characterized in that** one amongst the two hosing sets (31) is provided with male quick couplers (32) and the other hosing set (31) is provided with female quick couplers (32).
